# EUROPÄISCHE PATENTSCHRIFT

(11) **EP 2 297 224 B1**
(45) Veröffentlichungstag und Bekanntmachung des Hinweises auf die Patenterteilung: **27.11.2013**
(21) Anmeldenummer: 09779402.8
(22) Anmeldetag: 05.05.2009
(51) Int. Cl.: C08G 65/00

(54) **VERFAHREN ZUR HERSTELLUNG VON POLYALKYLENGLYKOLDI(METH)ACRYLATEN**
METHOD FOR PRODUCING POLYALKYLENE GLYCOLDI(METH)ACRYLATES
PROCÉDÉ DE FABRICATION DE DI(MÉTH)ACRYLATES DE POLYALKYLÈNE GLYCOL

(30) Priorität: 07.07.2008 DE 102008040214
(43) Veröffentlichungstag der Anmeldung: 23.03.2011
(73) Patentinhaber: Evonik Röhm GmbH, 64293 Darmstadt (DE)
(72) Erfinder: SCHÜTZ, Thorben, 64342 Seeheim-Jugenheim (DE); KNEBEL, Joachim, 64665 Alsbach-Hähnlein (DE); GOMEZ, Andreu Mario, 64319 Pfungstadt (DE)
(86) Internationale Anmeldenummer: PCT/EP2009/055368
(87) Internationale Veröffentlichungsnummer: WO 2010/003710

(56) Entgegenhaltungen:
- WO-A-00/42085
- US-A- 5 563 183
- US-A- 5 981 740
- US-A1- 2002 127 383

## Beschreibung

Die vorliegende Erfindung betrifft ein Verfahren zur Herstellung von Polyalkylenglykoldi(meth)acrylaten.

Polyalkylenglykoldi(meth)acrylate werden vielfach als Comonomere eingesetzt. Dementsprechend sind vielfältige Methoden bekannt, um diese Verbindungen zu erhalten.

Beispielsweise können diese Verbindungen durch Umsetzung von Polyalkylenglykolen mit Methyl(meth)acrylat erhalten werden. Zur Verbesserung der Ausbeute und der Selektivität der Reaktion können unterschiedliche Katalysatoren eingesetzt werden.

Beispielsweise beschreibt die Druckschrift DE 28 05 702 die Herstellung von Estern ungesättigter Carbonsäuren. Zur Katalyse der beschriebenen Reaktionen können insbesondere Verbindungen eingesetzt werden, die Zirkonium und/oder Calcium enthalten. Zu den besonders geeigneten Katalysatoren gehört insbesondere Zirkoniumacetylacetonat. Die Herstellung von 1,3-Butandioldimethacrylat wird explizit beschrieben. Die Umsetzungen führen zu hohen Ausbeuten von ca. 97%, bezogen auf den eingesetzten Alkohol. Nachteilig ist jedoch, dass der Katalysator relativ teuer ist und nur sehr schwer aus der Reaktionsmischung abgetrennt werden kann.

Ein Verfahren zur Abtrennung dieses Katalysators wird zwar in DE 199 40 622 dargelegt, jedoch ist das Verfahren in der Durchführung relativ teuer.

Des Weiteren können Säuren oder Basen eingesetzt werden, um die Umesterung zu katalysieren. Derartige Reaktionen werden beispielsweise in CN 1355161, DE 34 23 443 oder EP-A-0 534 666 dargelegt. Bei Einsatz dieser Katalysatoren muss allerdings mit Nebenreaktionen gerechnet werden, wie beispielsweise der Michael-Addition, die sowohl die Reinheit des gewünschten Dimethacrylats als auch die Ausbeute schmälert.

Weiterhin kann Polyalkylenglykoldi(meth)acrylat durch Umsetzung von Polyalkylenglykol mit (Meth)acrylsäureanhydrid erhalten werden. Diese Reaktionen sind beispielsweise in US 5,563,183 und EP 670 341 dargestellt. Gemäß der Druckschrift US 5,563,183 muss für diese Reaktion ein Katalysator eingesetzt werden, wobei diese Reaktion in einem Lösungsmittel erfolgt. Nach der Lehre des Dokuments EP 670 341 ist die Verwendung eines Katalysators mit Vorteilen behaftet. In den Beispielen dieser Druckschriften wird die Reaktion unter Verwendung eines Katalysators bei einer Temperatur von ca. 25 bis 55°C ausgeführt.

Die Verwendung von Katalysatoren oder Lösungsmitteln, um die Reaktionstemperaturen niedrig zu halten, ist jedoch mit Nachteilen verbunden. So müssen die Katalysatoren nach der Reaktion vielfach abgetrennt werden, um ein Produkt zu erhalten, das gehobenen Ansprüchen genügt. Die Abtrennung dieser Bestandteile der Reaktionsmischung ist weiterhin mit Kosten verbunden. Darüber hinaus ist bei Verwendung von Lösungsmitteln ein erhöhtes Reaktionsvotumen notwendig, die zu einem erhöhten Investitionsbedarf bei einer Anlage zur Herstellung von Polyalkylenglykoldi(meth)acrylaten führt.

In Anbetracht des Standes der Technik war es nun Aufgabe der vorliegenden Erfindung, ein Verfahren zur Herstellung von Polyalkylenglykoldi(meth)acrylaten zur Verfügung zu stellen bei dem das Produkt sehr kostengünstig erhalten werden kann. Darüber hinaus sollte das erhaltene Polyalkylenglykoldi(meth)acrylat nur sehr geringe Mengen an Nebenprodukten und Katalysatorresten enthalten.

Eine weitere Aufgabe der Erfindung bestand darin, ein Verfahren zu schaffen, bei dem Polyalkylenglykoldi(meth)acrylat sehr selektiv erhalten werden kann. Hierbei sollten die gemäß dem vorliegenden Verfahren erhältlichen Zusammensetzungen problemlos in weiteren Verfahrensschritten umgesetzt werden können, ohne dass eine aufwendige Aufreinigung notwendig sein sollte.

Darüber hinaus war es Aufgabe der vorliegenden Erfindung, Verfahren zur Herstellung von Polyalkylenglykoldi(meth)acrylat zur Verfügung zu stellen, die einfach und kostengünstig durchgeführt werden können. Hierbei sollte das Produkt möglichst in hohen Ausbeuten und, insgesamt gesehen, unter geringem Energieverbrauch erhalten werden.

Gelöst werden diese sowie weitere nicht explizit genannte Aufgaben, die jedoch aus den hierin einleitend diskutierten Zusammenhängen ohne Weiteres ableitbar oder erschließbar sind, durch Verfahren mit allen Merkmalen des Patentanspruchs 1. Zweckmäßige Abwandlungen der erfindungsgemäßen Verfahren werden in den auf Anspruch 1 rückbezogenen abhängigen Ansprüchen unter Schutz gestellt.

Gegenstand der vorliegenden Erfindung ist dementsprechend ein Verfahren zur Herstellung von Polyalkylenglykoldi(meth)acrylat durch Umsetzung von Polyalkylenglykol mit (Meth)acrylsäureanhydrid, welches dadurch gekennzeichnet ist, dass die Reaktionsmischung höchstens 0,5 Gew.-% Metallverbindungen und/oder Amine enthält, die Umsetzung in Gegenwart von Polymerisationsinhibitoren durchgeführt wird und die Reaktionstemperatur im Bereich von 70°C bis 120°C liegt.

Hierdurch gelingt es auf nicht vorhersehbare Weise, ein Verfahren zur Herstellung von Polyalkylenglykoldi(meth)acrylat zur Verfügung zu stellen, bei dem das Produkt sehr kostengünstig erhalten wird. Überraschend enthält das erhaltene Produkt nur sehr geringe Mengen an Nebenprodukten, wobei im Allgemeinen keine Katalysatorreste in der Produktmischung enthalten sind. Dementsprechend kann eine gemäß dem vorliegenden Verfahren erhältliche Zusammensetzung problemlos in weiteren Verfahrensschritten umgesetzt werden, ohne dass eine aufwendige Aufreinigung notwendig ist.

Des Weiteren ermöglicht das erfindungsgemäße Verfahren eine besonders selektive Herstellung von Polyalkylenglykoldi(meth)acrylaten.

Weiterhin kann das erfindungsgemäße Verfahren einfach und kostengünstig durchgeführt werden, wobei das Produkt in hohen Ausbeuten und, insgesamt gesehen, unter geringem Energieverbrauch erhalten werden kann.

Erfindungsgemäß werden Polyalkylenglykoldi(meth)acrylate hergestellt, wobei der Ausdruck (Meth)acrylat für Methacrylat, Acrylat und Mischungen aus Methacrylaten und Acrylaten steht. Polyalkylenglykoldi(meth)acrylate sind an sich weithin bekannt, wobei sich diese Verbindungen von Polyalkylenglykolen, die zwei reaktive Hydroxygruppen aufweisen, ableiten.

Zur Herstellung von Polyalkylenglykoldi(meth)acrylat wird erfindungsgemäß mindestens ein Polyalkylenglykol mit zwei reaktiven Hydroxygruppen eingesetzt. Das Gewichtsmittel des Molekulargewichts des Polyalkylenglykols liegt vorzugsweise im Bereich von 500 bis 20000 g/mol, besonders bevorzugt im Bereich 1000 bis 10000 g/mol.

Zu den bevorzugten Polyalkylenglykolen gehören insbesondere Poly-C₂-C₄-alkylenglykolverbindungen. Unter Poly-C₂-C₄-alkylenglykolverbindungen, die verschiedentlich auch als Poly-C₂-C₄-alkylenoxide oder Poly(oxy-C₂-C₄-alkylen)verbindungen bezeichnet werden, versteht man oligomere bzw. makromolekulare Polyether mit mehreren, in der Regel wenigstens 3, häufig wenigstens 5 und insbesondere wenigstens 10 und in der Regel nicht mehr als 500, häufig nicht mehr als 400, z. B. 10 bis 300 und insbesondere 10 bis 200 Wiederholungseinheiten, dievon C₂-C₄-Alkylenglykolen abgeleitet sind. Diese Verbindungen können linear oder verzweigt sein und weisen in der Regel im Mittel wenigstens zwei freie OH-Gruppe im Molekül auf.

Bevorzugt sind lineare Poly-C₂-C₄-alkylenglykolverbindungen mit etwa zwei freien OH-Gruppe je Molekül (d.h. etwa 1,9 bis 2,1 freie OH-Gruppen im Mittel). Derartige Verbindungen lassen sich durch die allgemeine Formel P beschreiben:

HO-(A-O)ₙ-H (P),

worin n die Anzahl der Wiederholungseinheiten angibt und in der Regel für eine Zahl im Bereich von 3 bis 500, insbesondere Im Bereich von 5 bis 400, besonders bevorzugt im Bereich von 10 bis 300 und ganz besonderes bevorzugt im Bereich von 10 bis 200 steht, und A für C₂-C₄-Alkylen wie 1,2-Ethandiyl, 1,3-Propandiyl, 1,2-Propandiyl, 1,2-Butandiyl oder 1,4-Butandiyl steht.

Insbesondere ist das erfindungsgemäße Verfahren zur Herstellung von (Poly-C₂-C₄-alkylenglykol)-di(meth)acrylsäureestern geeignet, worin wenigstens 50 Gew.-%, vorzugsweise wenigstens 70 Gew.-%, insbesondere wenigstens 90 Gew.-% und speziell alle der Wiederholungseinheiten in der eingesetzten Poly-C₂-C₄-alkylenglykolverbindung P von Ethylenglykol bzw. von Ethylenoxid abgeleitet sind. Dementsprechend stehen vorzugsweise wenigstens 50 Gew.-%, insbesondere wenigstens 70 Gew.-%, ganz besonders bevorzugt wenigstens 90 Gew.-% und speziell alle der Einheiten A-O in Formel P für CH₂-CH₂-O. Gemäß einer weiteren bevorzugten Ausgestaltung der vorliegenden Erfindung können wenigstens 50 Gew.-%, vorzugsweise wenigstens 70 Gew.-%, insbesondere wenigstens 90 Gew.-% und speziell alle der

Wiederholungseinheiten in der eingesetzten Poly-C₂-C₄-alkylenglykolverbindung P von Propylenglykol bzw. Propylenoxyd abgeleitet sein.

Gemäß der vorliegenden Erfindung wird Polyalkylenglykol mit (Meth)acrylsäureanhydrid umgesetzt. Besonders bevorzugt wird insbesondere Methacrylsäureanhydrid eingesetzt, welches die CAS-Nummer 760-93-0 hat.

Das Molverhältnis von (Meth)acrylsäureanhydrid zu Polyalkylenglykol kann vorzugsweise im Bereich von 4:1 bis 2:1, besonders bevorzugt im Bereich von 3:1 bis 2,1:1 liegen. Bezogen auf den Anteil an umzusetzenden Hydroxygruppen ergibt sich ein Molverhältnis von 2:1 bis 1:1, besonders bevorzugt 1,5:1 bis 1,05:1 (Meth)acrylsäureanhydrid zu OH-Gruppe des Polyalkylenglykols.

Die Umsetzung kann bei Über- oder Unterdruck erfolgen. Gemäß einer besonders zweckmäßigen Abwandlung der vorliegenden Erfindung kann die Umesterung bei einem Druck im Bereich von 200 bis 2000 mbar, besonders bevorzugt im Bereich von 500 bis 1300 mbar durchgeführt werden.

Gemäß einer bevorzugten Ausführungsform der vorliegenden Erfindung erfolgt die Umsetzung vorzugsweise bei einer Temperatur im Bereich von 70°C bis 120°C, besonders bevorzugt im Bereich von 80°C bis 100°C.

Erfindungsgemäß ist der Anteil an Metallverbindungen oder Aminen auf 0,5 Gew.-%, besonders bevorzugt 0,05 Gew.-%, bezogen auf die Reaktionsmischung begrenzt. Gemäß einem besonderen Aspekt ist in der Reaktionsmischung keine Metallverbindung oder kein Amin enthalten. Diese Angaben beziehen sich auf lösliche Anteile. Metallverbindungen und/oder Amine katalysieren üblich die Umsetzungen von (Meth)acrylsäureanhydrid mit Hydroxygruppen von Polyalkylenglykolen. Dementsprechend sind derartige Katalysatoren für das vorliegende Verfahren nicht notwendig. Metallverbindungen und Amine sind in der Fachwelt bekannt und beispielsweise in Ullmanns Encyclopedia of Industrial Chemistry (6. Auflage), Verlag Wiley-VCH ,Weinheim 2003 oder Römpp Chemielexikon, 2. Auflage auf CD-ROM dargelegt. Zu den Metallverbindungen gehören insbesondere Salze, wie z.B. Halogenide, Hydroxide oder Oxide von Alkalimetallen, wie LiOH, KOH, oder Zirkoniumverbindungen. Zu den Aminen gehören beispielsweise Ammoniak, Triethylamin, Tributylamin u.ä.

Erfindungsgemäß werden bei der Umsetzung Polymerisationsinhibitoren eingesetzt. Diese Verbindungen, wie beispielsweise Hydrochinone, Hydrochinonether, wie Hydrochinonmonomethylether oder Di-tert-butylbrenzcatechin, Phenothiazin, 4-Hydroxy-2,2,6,6-tetramethylpiperidin-1-oxyl, Methylenblau oder sterisch gehinderte Phenole, beispielsweise 2,4-dimethyl-6-tert-butylphenol, sind in der Fachwelt weithin bekannt. Diese Verbindungen können einzeln oder in Form von Mischungen eingesetzt werden und sind im Allgemeinen kommerziell erhältlich. Für weitere Details wird auf die gängige Fachliteratur, insbesondere auf das Römpp-Lexikon Chemie; Herausgeber: J. Falbe, M. Regitz; Stuttgart, New York; 10. Auflage (1996); Stichwort "Antioxidantien" und die an dieser Stelle zitierten Literaturstellen verwiesen.

Vorzugsweise werden insbesondere Phenole als Polymerisationsinhibitor eingesetzt. Besonders überraschende Vorteile können bei Verwendung von Mischungen erzielt werden, die Hydrochinonmonomethylether und/oder 2,4-dimethyl-6-tert-butylphenol enthalten. Besonders bevorzugt liegt das Molverhältnis von Hydrochinonmonomethylether zu 2,4-dimethyl-6-tert-butylphenol hierbei im Bereich von 2:1 bis 1:2. Bezogen auf das Gewicht der gesamten Reaktionsmischung kann der Anteil der Inhibitoren einzeln oder als Mischung im Allgemeinen 0,01 - 0,5 % (wt/wt) betragen.

Diese Polymerisationsinhibitoren können vor oder zu Beginn der Reaktion in die Reaktionsmischung gegeben werden. Darüber hinaus können auch Teile der beigefügten Polymerisationsinhibitoren während der Umsetzung hinzu gegeben werden.

Die Umsetzung kann vorzugsweise in Gegenwart von Sauerstoff, insbesondere Luftsauerstoff bewirkt werden.

Die Reaktion kann sowohl kontinuierlich als auch chargenweise durchgeführt werden. Das erfindungsgemäße Verfahren kann in Substanz, d.h. ohne Verwendung eines weiteren Lösungsmittels durchgeführt werden. Falls gewünscht kann auch ein inertes Lösungsmittel eingesetzt werden. Hierzu gehören unter anderem Benzin, Benzol, Toluol, n-Hexan, Cyclohexan und Methylisobutylketon (MIBK), Methylethylketon (MEK). Besondere Vorteile, insbesondere hinsichtlich der Aufreinigung der Produkte sowie der Produktreinheit, können erzielt werden, falls die eingesetzte Reaktionsmischung mindestens 90 Gew.-% Polyalkylenglykol und (Meth)acrylsäureanhydrid, besonders bevorzugt mindestens 95 Gew.-% Polyalkylenglykol und (Meth)acrylsäureanhydrid umfasst. Daher werden gemäß dieser bevorzugten Ausführungsform des erfindungsgemäßen Verfahrens nur geringe Mengen, besonders bevorzugt keine Lösungsmittel eingesetzt.

Bei einer besonders zweckmäßigen Varianten der erfindungsgemäßen Umesterung werden sämtliche Komponenten, wie beispielsweise das Polyalkylenglykol, das (Meth)acrylsäureanhydrid sowie der Polymerisationsinhibitor, gemischt, wonach diese Reaktionsmischung in Gegenwart von Luftsauerstoff auf mindestens 60°C, bevorzugt etwa 80 bis 100°C erwärmt wird. Die Reaktionszeiten sind unter anderem von den gewählten Parametern, wie zum Beispiel Druck und Temperatur, abhängig. Sie liegen aber im Allgemeinen im Bereich von 1 bis 24 Stunden, bevorzugt von 2 bis 20 Stunden und ganz besonders bevorzugt 4 bis 8 Stunden. Bei kontinuierlichen Verfahren liegen die Verweilzeiten im Allgemeinen im Bereich von 0,5 bis 24 Stunden, bevorzugt von 1 bis 12 Stunden und ganz besonders bevorzugt 4 bis 8 Stunden. Weitere Hinweise in Bezug auf die Reaktionszeiten kann der Fachmann dem beigefügten Beispiel entnehmen.

Vorzugsweise kann die Reaktion unter Rühren stattfinden, wobei die Rührgeschwindigkeit besonders bevorzugt im Bereich von 50 bis 2000 Upm, ganz besonders bevorzugt im Bereich von 100 bis 500 Upm liegen kann.

Der pH-Wert kann in einem weiten Bereich liegen. Allerdings wird bei der Umsetzung (Meth)acrylsäure gebildet, die aufgrund des geringen Gehalts an Metallverbindungen zu einer Absenkung des pH-Wertes führt. Zweckmäßig kann die Umsetzung bei einem pH-Wert im Bereich von 0 bis 8, vorzugsweise 2 bis 7 durchgeführt werden, wobei sich dieser Wert anhand einer mit einem 10 fachen Überschuss mit Wasser gemischten Probe des Reaktionsmischung gemessen wird.

Eine geeignete Anlage zur Durchführung der vorliegenden Umesterung kann beispielsweise einen Rührkesselreaktor mit Rührwerk und Dampfheizung umfassen. Derartige Anlagen sind an sich bekannt und beispielsweise in Ullmanns Encyclopedia of Industrial Chemistry (6. Auflage), Verlag Wiley-VCH ,Weinheim 2003, Band 10, Seite 647, beschrieben. Die Größe der Anlage ist von der herzustellenden Menge an Polyalkylenglykoldi(meth)acrylat abhängig, wobei das vorliegende Verfahren sowohl im Labormaßstab als auch in großtechnischem Maßstab durchgeführt werden kann. Gemäß einem besonderen Aspekt kann der Rührkesselreaktor dementsprechend ein Kesselvolumen im Bereich von 1m³ bis 30 m³, bevorzugt 3 m³ bis 20 m³ aufweisen. Das Rührwerk des Reaktorkessels kann insbesondere in Form eines Ankerrührers, Impellers, Schaufel-oder Inter-MIG-rührers ausgestaltet sein.

Die im Reaktionsgemische enthaltene (Meth)acrylsäure oder ein Salz dieser Säure kann vielfach im erhaltenen Reaktionsgemisch verbleiben, ohne dass dies für die hieraus erhältlichen Polymere einen nachteiligen Einfluss aufweisen würde. Je nach Einsatzzweck der Polymere kann die erhaltene (Meth)acrylsäure auch durch Extraktionsverfahren aus dem Reaktionsgemisch abgetrennt werden.

Nach Beendigung der Umsetzung wird vielfach überschüssiges (Meth)acrylsäureanhydrid aus dem Reaktionsgemisch entfernt. Hierzu kann beispielsweise Wasser eingesetzt werden, wobei der pH-Wert, vorzugsweise so eingestellt wird, dass die im Reaktionsgemisch enthaltende (Meth)acrylsäure deprotoniert wird.

Gemäß einer bevorzugten Abwandlung des erfindungsgemäßen Verfahrens liegt Gewichtsverhältnis von aufzuarbeitender Reaktionsmischung und Wasser im Bereich von 5:1 bis 1:5, besonders bevorzugt 2:1 bis 1:2. Vorteilhaft kann der pH-Wert der wässrigen Phase auf einen Wert größer oder gleich 4,5 eingestellt werden, wobei der pH-Wert der wässrigen Phase bevorzugt im Bereich von 5 bis 8, besonders bevorzugt im Bereich von 5,5 bis 7 liegt.

Hierbei kann zunächst Wasser zugegeben werden. Nach der Zugabe des Wassers kann anschließend der pH-Wert der wässrigen Phase auf die zuvor genannten Werte eingestellt werden.

Die Zugabe des Wassers kann bei der Reaktionstemperatur oder nach einer Abkühlung der Reaktionsmischung erfolgen. Überraschende Vorteile hinsichtlich der Produktreinheit können dadurch erzielt werden, dass das Wasser bei einer Temperatur im Bereich von 20 bis 70°C, vorzugsweise 40 bis 60 °C zugegeben wird. Die Einstellung des pH-Wertes kann vorzugsweise bei einer Temperatur im Bereich von 10 bis 60°C, besonders bevorzugt 20 bis 50 °C erfolgen.

Durch diese Maßnahmen gelingt es überraschend, eine einfach handhabbare Ausgangsmischung zur Herstellung von Polymeren zu erhalten. Die so erhaltene wässrige Lösung zeigt keine Explosionsgefahr, so dass diese besonders einfach transportiert werden kann.

Die gemäß dem vorliegenden Verfahren erhältlichen wässrigen Zusammensetzungen können vielfach ohne Abtrennung der freigesetzten (Meth)acrylsäure eingesetzt werden. Weiterhin kann die freigesetzte (Meth)acrylsäure aus der Zusammensetzung abgetrennt werden. Das jeweils erhaltene Polyalkylenglykoldi(meth)acrylat genügt bereits vielfach den zuvor dargelegten hohen Anforderungen, so dass eine weitere Aufreinigung vielfach nicht notwendig ist. Zur weiteren Qualitätssteigerung kann die erhaltene Mischung durch bekannte Verfahren aufgereinigt werden.

Gemäß einer Ausgestaltung des erfindungsgemäßen Verfahrens kann die erhaltene Produktmischung durch Filtrationsverfahren aufgereinigt werden. Diese Verfahren sind aus dem Stand der Technik bekannt (W. Gösele, Chr. Alt in Ullmann's Encyclopedia of Industrial Chemistry, (6. Auflage),Verlag Wiley-VCH, Weinheim 2003 , Band 13, Seiten 731 und 746), wobei übliche Filtrationshilfsmittel, wie beispielsweise Bleicherde und A-luminiumsilicate (Perlit) eingesetzt werden können. Beispielsweise können unter anderem kontinuierlich betreibbare Filter für eine Anschwemmfiltration verwendet werden.

Zu den Anwendungen, die keine Abtrennung der freigesetzten (Meth)acrylsäure erfordern, zählen insbesondere quellbare Polymere, die unter anderem zum Abdichten von Rohrleitungen oder von Bauwerken oder zur Bildung von wasserundurchlässigen Bodenschichten eingesetzt werden können. Diese Anwendungen sind unter anderem in EP 0 376 094, JP 02-206657, JP 2003193032 A und EP 0 470 008 A1 dargelegt.

Eine erfindungsgemäß erhaltene wässrige Zusammensetzung kann in einer wässrigen Polymerisation eingesetzt werden, wobei Dichtmassen mit einer überraschend hohen Quellbarkeit erhalten werden. Eine verbesserte Quellbarkeit zeigen überraschend Polymere, die durch Polymerisation einer Zusammensetzung erhältlich sind, die mindestens ein Polyalkylenglykol-di(meth)acrylat mit einem gewichtsmittleren Molekulargewicht größer 2.500 g/mol, vorzugsweise im Bereich von 2.500 bis 10.000 g/mol, besonders bevorzugt größer 5.000 g/mol, insbesondere größer 6.000 g/mol, enthält. Die Ermittlung des Molekulargewichts kann dabei auf an sich bekannte Weise durch Gelpermeation (GPC) oder Lichtstreuung erfolgen. Besonders bewährt hat sich die Bestimmung mittels GPC.

Das Polymer kann ggf. weitere Comonomer-Einheiten aufweisen. Bevorzugt werden Polymere, die durch Copolymerisation mit copolymerisierbaren Aminen und/oder Hydroxyalkylestern erhältlich sind. Die Polymerisation erfolgt dabei vorzugsweise unter Verwendung eines radikalbildenden Initiators bei Temperaturen im Bereich von 0°C bis 100°C. Vorzugsweise wird die Zusammensetzung durch Zusatz von 1 Gew.-% bis 7 Gew.-%, bezogen auf das Gesamtgewicht der Zusammensetzung, eines wasserlöslichen anorganischen Peroxodisulfats, wie Alkali- oder Ammonium-peroxodisulfat, bei Temperaturen über 0°C, vorzugsweise bei einer Temperatur von 5°C bis 40°C in kurzer Zeit unter Bildung eines flexiblen Gels ausgehärtet. Die Härtungszeit beträgt vorzugsweise 10 Minuten bis 1500 Miunten, besonders bevorzugt jedoch weniger als 1000 Minuten. Neben oder anstelle von Peroxodisulfat können andere wasserlösliche, radikalbildende Initiatoren, wie tert.-Butylhydroperoxid, in einer wirksamen Menge eingesetzt werden, sofern sie zusammen mit dem tertiaren Amin ein bei tiefen Temperaturen wirksames Redoxsystem bilden.

Nachfolgend soll die vorliegende Erfindung anhand eines Beispiels erläutert werden, ohne dass hierdurch eine Beschränkung erfolgen soll.

### Beispiel 1

In einem 500 ml Vierhalsrundkolben, der mit einem Säbelrührer mit Rührhülse und Rührmotor, Lufteinleitung, Sumpfthermometer und einem Intensivkühler ausgestattet war, wurden 149,3 g (0,019 mol) Polyethylenglykol mit einem Molekulargewicht von 8000 (PEG 8000) vorgelegt und unter Rühren geschmolzen. Bei ca. 80°C Sumpftemperatur wurden 8,2 g (0,053 mol) Methacrylsäureanhydrid sowie eine Mischung von Polymerisationinhibitoren, bestehend aus 0,158 g (1000 ppm) Hydrochinonmonomethylether und 0,158g (1000 ppm) 2,4-Dimethyl-6-tert-butylphenol zugegeben. Anschließend wurde der Ansatz bei einer Sumpftemperatur von 90°C 6 Stunden gerührt. Nach der Reaktionszeit wurde das noch warme Produkt (90-85°C) mit 140g Wasser versetzt und 0,5 Stunden gerührt (Lsg. kühlt dabei bis auf ca. 50°C ab). Die Lösung wurde tropfenweise mit 5,01g 40%iger NaOH-Lösung neutralisiert (pH 6). Um eine 50%ige Lösung zu erhalten wurden noch 4,89g VE-Wasser zugegeben, nochmals 10 Min. gerührt und abgefüllt.

Die erhaltene Ausbeute an Polyethylenglykoldimethacrylat betrug 95 % bezogen auf das eingesetzte Polyethylenglykol.

### Anwendungsbeispiel 1

Eine Monomerzusammensetzung umfassend 50 Gew.-% Polyethylenglykoldimethacrylat, 30 Gew.-% Acrylsäure und 20 Gew.-% 2-Dimethylaminoethylmethacrylat, jeweils bezogen auf den Monomeranteil, wurde hergestellt. Das zur Herstellung des Polyethylenglykoldimethacrylats eingesetzte Polyethylenglykol hatte ein Molekulargewicht von 8000 g/mol.

Die Zusammensetzung wurde in Substanz im Flachkammerverfahren in Kammern aus Glasplatten zunächst 7 Stunden bei 60°C im Wasserbad und anschließend 18 Stunden bei 100°C im Trockenschrank unter Zugabe von 0,2 Gew.-% 2,2'-Azobisisobutyronitril polymerisiert.

Zur Bestimmung der Quellung wurde eine Probe im Vakuumtrockenschrank bei 100°C für 18 Stunden konditioniert. Nach Abkühlen auf Raumtemperatur wurden die Probenkörper gewogen und anschließend auf Edelstahlnetzen in klaren Glasflaschen in destilliertem Wasser (100 ml) im Klimaraum bei 23°C gelagert. In regelmäßigen Abständen wurden sie entnommen, anhaftende Flüssigkeit mit einem saugfähigen Papier aufgenommen und die Polymerstücke erneut gewogen. Die Messung wurde bis zum Erreichen der maximalen Quellbarkeit fortgeführt. Die Quellung des eingesetzten Polymers betrug ca. 239%.

### Anwendungsbeispiel 2

Das Anwendungsbeispiel 1 wurde im Wesentlichen wiederholt, wobei jedoch die Monomerzusammensetzung in eine wässrige Lösung überführt wurde, die einen Wasseranteil von 50 Gew.-% aufwies. Die Polymerisation der wässrigen Lösung wurde mit 1 Gew.-% Ammonium-peroxodisulfat und 2 Gew.-% Ethanolamin bei Raumtemperatur innerhalb eines Zeitraums von 500 Minuten bewirkt.

Die Quellung des erhaltenen Polymers betrug 367 %.

Ein Vergleich dieser Ergebnisse zeigt, dass der Einsatz einer wässrigen Lösung zu überraschenden Vorteilen hinsichtlich der Quellbarkeit führt, die mit der Fähigkeit des Polymers eine Abdichtung zu bewirken verknüpft ist.

## Patentansprüche

1. Verfahren zur Herstellung von Polyalkylenglykoldi(meth)acrylaten durch Umsetzung von Polyalkylenglykol mit (Meth)acrylsäureanhydrid, **dadurch gekennzeichnet, dass** die Reaktionsmischung keine Metallverbindungen und/oder Amine enthält, die Umsetzung in Gegenwart von Polymerisationsinhibitoren durchgeführt wird und die Reaktionstemperatur im Bereich von 70°C bis 120°C liegt.

2. Verfahren gemäß Anspruch 1, **dadurch gekennzeichnet, dass** die eingesetzte Reaktionsmischung mindestens 90 Gew.-% Polyalkylenglykol und (Meth)acrylsäureanhydrid umfasst.

3. Verfahren gemäß Anspruch 2, **dadurch gekennzeichnet, dass** die eingesetzte Reaktionsmischung im Wesentlichen aus Polyalkylenglykol, (Meth)acrylsäureanhydrid und Polymerisationsinhibitor besteht.

4. Verfahren gemäß mindestens einem der vorhergehenden Ansprüche, **dadurch gekennzeichnet, dass** als Polymerisationsinhibitor mindestens ein Phenol eingesetzt wird.

5. Verfahren gemäß Anspruch 4, **dadurch gekennzeichnet, dass** als Polymerisationsinhibitor Hydrochinonmonomethylether und/oder 2,4-Dimethyl-6-tert-butylphenol eingesetzt wird.

6. Verfahren gemäß mindestens einem der vorhergehenden Ansprüche, **dadurch gekennzeichnet, dass** die Reaktionsdauer im Bereich von 1 Stunde bis 24 Stunden liegt.

7. Verfahren gemäß mindestens einem der vorhergehenden Ansprüche, **dadurch gekennzeichnet, dass** die Umsetzung bei einem Druck im Bereich von 500 mbar bis 1300 mbar erfolgt.

8. Verfahren gemäß mindestens einem der vorhergehenden Ansprüche, **dadurch gekennzeichnet, dass** das Verfahren als batch oder semi-batch Verfahren durchgeführt wird.

9. Verfahren gemäß mindestens einem der vorhergehenden Ansprüche, **dadurch gekennzeichnet, dass** das Polyalkylenglykol ein Gewichtsmittel des Molekulargewichts im Bereich von 1000 bis 10000 g/mol aufweist.

10. Verfahren gemäß mindestens einem der vorhergehenden Ansprüche, **dadurch gekennzeichnet, dass** das Polyalkylenglykol Polyethylenglykol oder Polypropylenglykol ist.

11. Verfahren gemäß mindestens einem der vorhergehenden Ansprüche, **dadurch gekennzeichnet, dass** das Molverhältnis von (Meth)acrylsäureanhydrid zu Polyalkylenglykol im Bereich von 4:1 bis 2:1 liegt.

12. Verfahren gemäß mindestens einem der vorhergehenden Ansprüche, **dadurch gekennzeichnet, dass** mindestens ein Teil des eingesetzten Polyalkylenglykols vorgelegt, auf die Reaktionstemperatur erhitzt wird und zu dem erhitzten Polyalkylenglykol (Meth)acrylsäureanhydrid zugegeben wird.

13. Verfahren gemäß mindestens einem der vorhergehenden Ansprüche, **dadurch gekennzeichnet, dass** das erhaltene Reaktionsgemisch durch Zugabe von Wasser aufgearbeitet wird.

14. Verfahren gemäß Anspruch 13, **dadurch gekennzeichnet, dass** das Gewichtsverhältnis von aufzuarbeitender Reaktionsmischung und Wasser im Bereich von 5:1 bis 1:5 liegt.

15. Verfahren gemäß Anspruch 13 oder 14, **dadurch gekennzeichnet, dass** der pH auf einen Wert größer oder gleich 4,5 eingestellt wird.

## Claims

1. Process for preparing polyalkylene glycol di(meth)acrylates by reacting polyalkylene glycol with (meth)acrylic anhydride, **characterized in that** the reaction mixture contains no metal compounds and/or amines, the reaction is carried out in the presence of polymerization inhibitors and the reaction temperature is in the range from 70°C to 120°C.

2. Process according to Claim 1, **characterized in that** the reaction mixture used comprises at least 90% by weight of polyalkylene glycol and (meth)acrylic anhydride.

3. Process according to Claim 2, **characterized in that** the reaction mixture used consists essentially of polyalkylene glycol, (meth)acrylic anhydride and polymerization inhibitor.

4. Process according to at least one of the preceding claims, **characterized in that** the polymerization inhibitor used is at least one phenol.

5. Process according to Claim 4, **characterized in that** the polymerization inhibitor used is hydroquinone monomethyl ether and/or 2,4-dimethyl-6-tert-butylphenol.

6. Process according to at least one of the preceding claims, **characterized in that** the reaction time is in the range from 1 hour to 24 hours.

7. Process according to at least one of the preceding claims, **characterized in that** the reaction is effected at a pressure in the range from 500 mbar to 1300 mbar.

8. Process according to at least one of the preceding claims, **characterized in that** it is performed as a batchwise or semibatchwise process.

9. Process according to at least one of the preceding claims, **characterized in that** the polyalkylene glycol has a weight-average molecular weight in the range from 1000 to 10 000 g/mol.

10. Process according to at least one of the preceding claims, **characterized in that** the polyalkylene glycol is polyethylene glycol or polypropylene glycol.

11. Process according to at least one of the preceding claims, **characterized in that** the molar ratio of (meth)acrylic anhydride to polyalkylene glycol is in the range from 4:1 to 2:1.

12. Process according to at least one of the preceding claims, **characterized in that** at least a portion of the polyalkylene glycol used is initially charged and heated to the reaction temperature, and (meth)acrylic anhydride is added to the heated polyalkylene glycol.

13. Process according to at least one of the preceding claims, **characterized in that** the resulting reaction mixture is worked up by adding water.

14. Process according to Claim 13, **characterized in that** the weight ratio of reaction mixture to be worked up and water is in the range from 5:1 to 1:5.

15. Process according to Claim 13 or 14, **characterized in that** the pH is adjusted to a value greater than or equal to 4.5.

## Revendications

1. Procédé pour la préparation de di(méth)acrylates de polyalkylèneglycol par transformation de polyalkylèneglycol avec de l'anhydride de l'acide (méth)acrylique, **caractérisé en ce que** le mélange réactionnel ne contient pas de composés métalliques et/ou d'amines, la transformation est réalisée en présence d'inhibiteurs de polymérisation et la température de réaction se situe dans la plage de 70°C à 120°C.

2. Procédé selon la revendication 1, **caractérisé en ce que** le mélange réactionnel utilisé comprend au moins 90% en poids de polyalkylèneglycol et d'anhydride de l'acide (méth)acrylique.

3. Procédé selon la revendication 2, **caractérisé en ce que** le mélange réactionnel utilisé est essentiellement constitué de polyalkylèneglycol, d'anhydride de l'acide (méth)acrylique et d'inhibiteur de polymérisation.

4. Procédé selon au moins l'une quelconque des revendications précédentes, **caractérisé en ce qu'**on utilise, comme inhibiteur de polymérisation, au moins un phénol.

5. Procédé selon la revendication 4, **caractérisé en ce qu'**on utilise, comme inhibiteur de polymérisation, de l'hydroquinonemonométhyléther et/ou du 2,4-diméthyl-6-tert-butylphénol.

6. Procédé selon au moins l'une quelconque des revendications précédentes, **caractérisé en ce que** la durée de réaction se situe dans la plage de 1 heure à 24 heures.

7. Procédé selon au moins l'une quelconque des revendications précédentes, **caractérisé en ce que** la transformation est réalisée à une pression dans la plage de 500 mbars à 1300 mbars.

8. Procédé selon au moins l'une quelconque des revendications précédentes, **caractérisé en ce que** le procédé est réalisé sous forme de procédé par lots ou de procédé semi-continu.

9. Procédé selon au moins l'une quelconque des revendications précédentes, **caractérisé en ce que** le polyalkylèneglycol présente une moyenne pondérale du poids moléculaire dans la plage de 1000 g/mole à 10 000 g/mole.

10. Procédé selon au moins l'une quelconque des revendications précédentes, **caractérisé en ce que** le polyalkylèneglycol est du polyéthylèneglycol ou du polypropylèneglycol.

11. Procédé selon au moins l'une quelconque des revendications précédentes, **caractérisé en ce que** le rapport molaire d'anhydride de l'acide (méth)acrylique à polyalkylèneglycol se situe dans la plage de 4:1 à 2:1.

12. Procédé selon au moins l'une quelconque des revendications précédentes, **caractérisé en ce qu'**au moins une partie du polyalkylèneglycol utilisé est disposée au préalable, chauffée à la température de réaction et l'anhydride de l'acide (méth)acrylique est ajouté au polyalkylèneglycol chauffé.

13. Procédé selon au moins l'une quelconque des revendications précédentes, **caractérisé en ce que** le mélange réactionnel obtenu est traité par addition d'eau.

14. Procédé selon la revendication 13, **caractérisé en ce que** le rapport pondéral du mélange réactionnel à traiter à l'eau se situe dans la plage de 5:1 à 1:5.

15. Procédé selon la revendication 13 ou 14, **caractérisé en ce que** le pH est réglé à une valeur supérieure ou égale à 4,5.
